(19) Europäisches Patentamt
European Patent Office
Office européen des brevets

(11) **EP 2 851 881 A1**

## (12) EUROPEAN PATENT APPLICATION

(43) Date of publication:
**25.03.2015 Bulletin 2015/13**

(51) Int Cl.:
*G08B 13/24* (2006.01)   *G06K 19/073* (2006.01)

(21) Application number: **14152544.4**

(22) Date of filing: **24.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.09.2013 CN 201310429664**

(71) Applicant: **Beijing Shunte Technology Limited 100101 Beijing (CN)**

(72) Inventor: **Chen, Jin-Ke Beijing 100101 (CN)**

(74) Representative: **Gee, Steven William et al D.W. & S.W. GEE 1 South Lynn Gardens London Road Shipston on Stour Warwickshire CV36 4ER (GB)**

(54) **Non-revivable radio frequency identification tag and method of manufacturing the same**

(57)    A non-revivable Radio Frequency Identification (RFID) tag and a method of manufacturing the same are provided. The RFID tag includes a capacitor plate formed with a decoding point having an interior portion and an outer peripheral portion confining the interior portion. A conductive adhesive is filled into the interior portion and the outer peripheral portion, and then is solidified. The method includes the steps of: punching a recess on a capacitor plate of a circuit of the RFID tag to define a decoding point, wherein the decoding point has an interior portion and an outer peripheral portion confining the interior portion; filling a conductive adhesive into the decoding point in such a manner that the conductive adhesive is filled into the interior portion and the outer peripheral portion; and putting the RFID tag in an environment with a curing temperature so as to solidify or cure the conductive adhesive.

**Fig. 8**

**Description**

BACKGROUND OF THE INVENTION

1. Field of the Invention

The present invention relates generally to a record carrier used with a reader; and more particularly to a non-revivable Radio Frequency Identification (RFID) tag and a method of manufacturing the same.

2. The Prior Arts

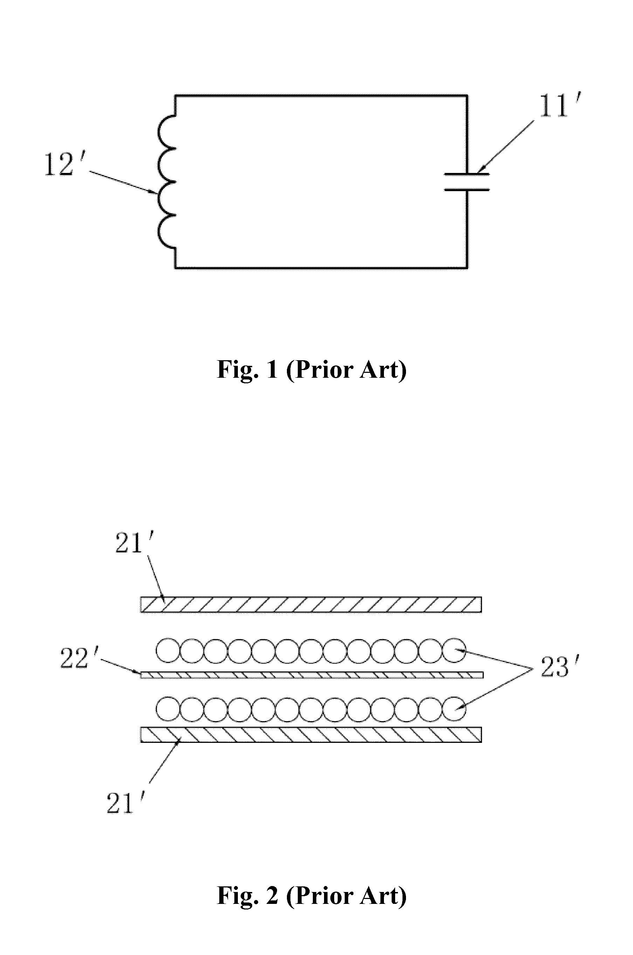

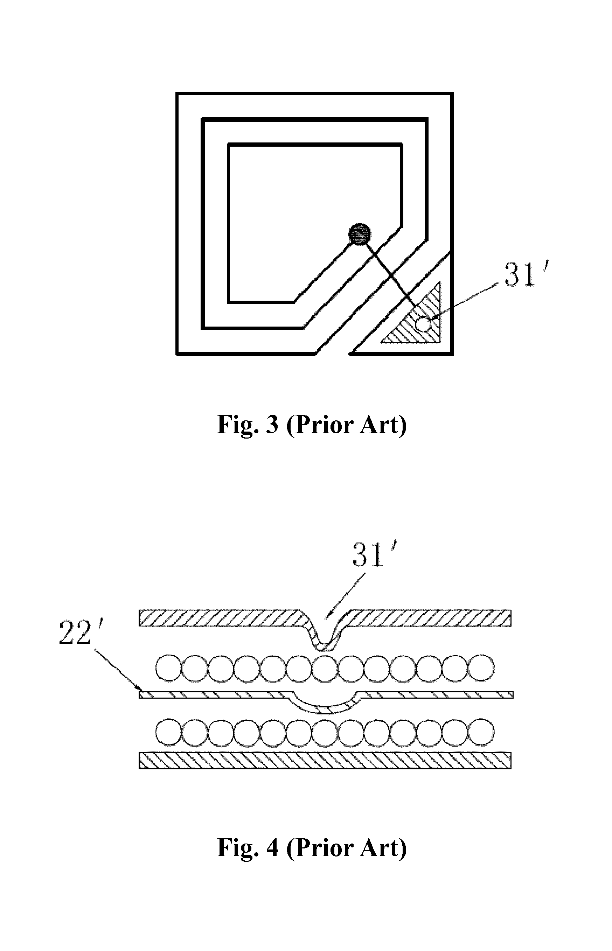

RFID tags are widely applied in various fields. The configuration and specification of the RFID tags can be designed according to the desires. Fig. 1 shows a most simplified circuit of a traditional RFID tag. As illustrated, a capacitor 11' and an inductor 12' are constructed as an LC oscillator circuit. As shown in Fig. 2, a dielectric layer 22' is disposed between two aluminum plates 21'; a heat-melting adhesive 23' is filled there between to laminate them together; and a capacitor and an inductor are printed or etched on the two aluminum plates 21' and then electrically connected together to form a loop circuit as shown in Fig. 3. The RFID tag should be configured to be associated with an anti-theft detection system to implement the anti-theft function, in which the anti-theft detection system emits a magnetic wave having a frequency same as an oscillation frequency of the LC oscillator circuit to cause the oscillation of the LC oscillator circuit and further excite a feedback signal there from, and the anti-theft detection system identifies the RFID tag by detecting the feedback signal. The oscillation frequency of the LC oscillator circuit is represented by an equation of $f = 1/(2\pi\sqrt{LC})$, wherein L is an inductance of the inductor and C is a capacitance of the capacitor.

In order for the RFID tag to be controllable, a dented spot 31', referred to as a decoding point, is formed on a capacitor plate as shown in Fig. 3. Referring to Fig. 4, a shortest distance is defined at the decoding point between two capacitor plates. When the RFID tag with the decoding point is decoded by a decoder, a sharp edge of the decoding point generates a higher discharge voltage to penetrate through or carbonize the dielectric layer 22' due to the point discharge effect, so as to cause a short circuit of the two capacitor plates and thus a deactivation of the LC oscillator circuit. The deactivated RFID tag can not be identified by the anti-theft detection system. Accordingly, the RFID tags are widely applied in hotels, shopping malls, supermarkets, and stores etc.

However, in practical applications, the decoded and deactivated RFID tags may revive, that is, they can be again identified by the anti-theft detection system. This may cause a great discomfort in supermarkets or department stores. For instance, after a pair of shoes was sold, the RFID tag attached therewith has been decoded by a decoder. The buyer wears the shoes and comes back to the shop in a few days. If the RFID tag can be again identified, the anti-theft detection system will generate an alarm. The reason resides in that the temporarily decoded and deactivated RFID tag revives after a period of stillness owing to the fact that dry environment or natural deformation may result in an increase of the distance between the two capacitor plates even a disconnection from each other in such a way that the LC oscillator circuit recovers to be able to be activated again. This type of reviving is generally known as "naturally reviving" since no external force is applied. On the other hand, the RFID tag is not always used in a still condition. As mentioned above, when the RFID tag is disposed on a pair of shoes, the decoding point of the RFID tag is liable to deform due to external forces in such a way that the two capacitor plates may be disconnected from each other, thereby making the LC oscillator circuit activate. This type of reviving is called "externally reviving". Therefore, the reviving problem of the RFID tag becomes an urgent issue to be solved presently.

As will be stated below, there are three types of conventional technical solutions used to solve the reviving problem of the RFID tag.

**(1) Rubbing type anti-reviving technique**

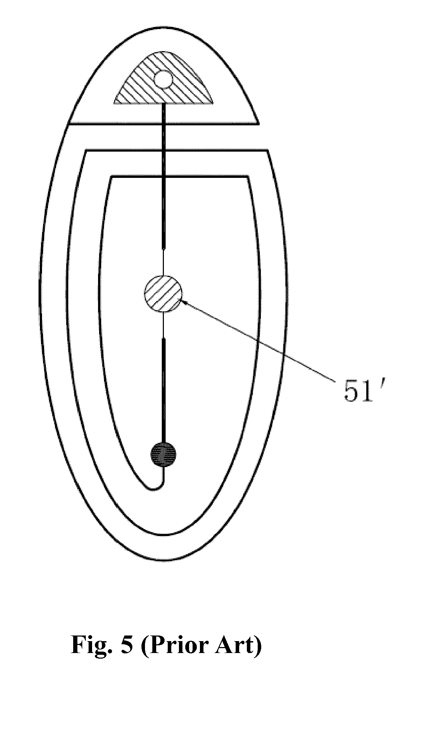

As shown in Fig. 5, a hard insulated toughening piece 51' is attached onto a narrow section of the LC oscillator circuit. During folding and bending the RFID tag upward and downward, the insulated toughening piece 51' will cut off the narrow section due to a different deformation between the insulated toughening piece 51' and the RFID tag, cause a short circuit of the LC oscillator circuit, and thus make the RFID tag deactivate, so as to achieve the objective of anti-reviving. However, it is noted that the effect of anti-reviving is more obvious if the RFID tag is folded and bent upward and downward at the narrow section, but non-obvious if the RFID tag is folded and bent leftward and rightward at the narrow section or if the RFID tag is folded and bent at a place proximate to the decoding point.

**(2) Decoding point protection type anti-reviving technique**

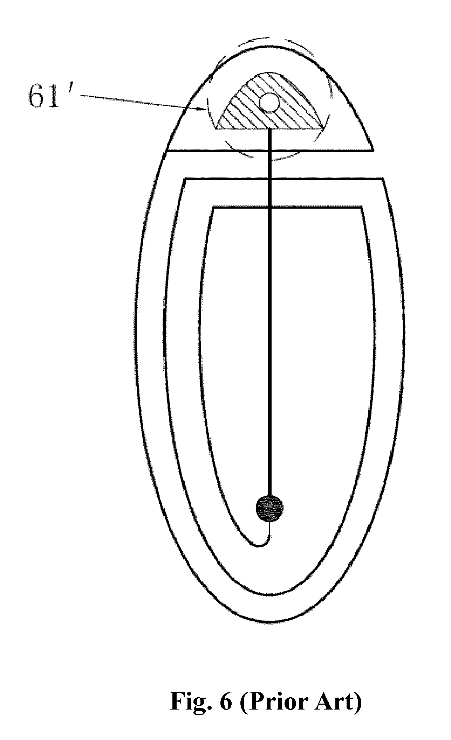

As stated above, the reviving of the RFID tag sometimes results from an external force to disconnect the two capacitor plates from each other from a state of short circuit. This problem can be solved in a certain extent if the decoding point is properly protected. As shown by dotted lines in Fig. 6, a hard insulated toughening piece 61' is attached on the decoding point of the capacitor plate. Since the insulated toughening piece 61' has a relatively higher anti-deformation strength, it can resist against an action of an external force on the decoding point to a certain extent. However, this structure does not provide an obvious effect of anti-reviving for naturally reviving or externally reviving resulting from an external force acting on a back of the insulated toughening piece 61'.

**(3) Cutting type anti-reviving technique**

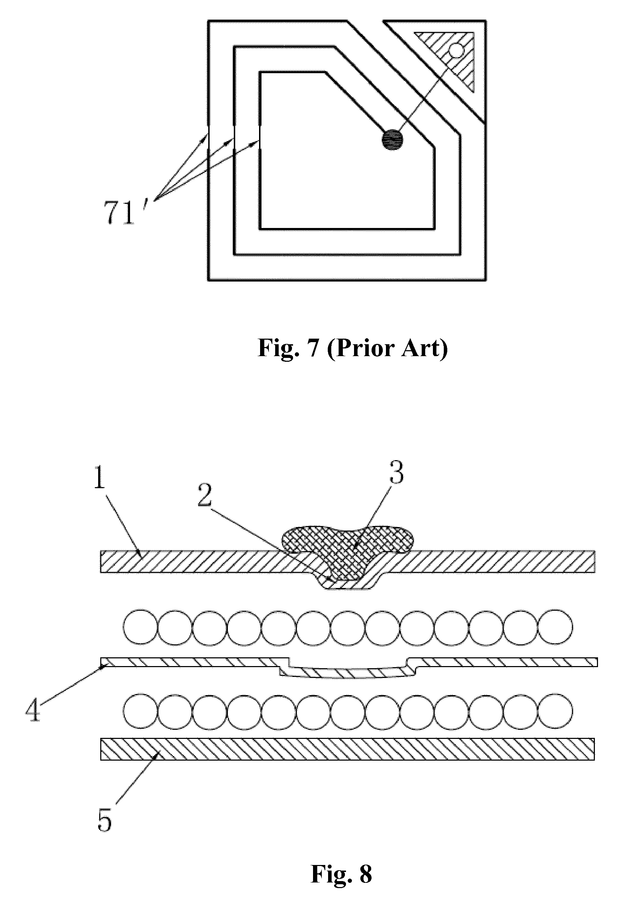

As shown in Fig. 7, in the manufacturing process of the RFID tag, some sections 71' of the LC oscillator circuit are formed as a connected state but are easily disconnected. For example, the sections 71' are formed as a narrow line; or a side edge of the sections 71' are formed with a cut. When such a RFID tag is attached on an article, the sections of the LC oscillator circuit are easily deformed and thus disconnected due to the action of the external force, thereby deactivating the RFID tag. However, in practice it is relatively difficult to form this structure, and thus the rate of the defective products is relatively higher in the manufacturing process. Therefore, the RFID tags may be deactivated due to the action of an external force before they are attached on articles.

SUMMARY OF THE INVENTION

A primary objective of the present invention is to provide a RFID tag with a conductive adhesive that is easy to be manufactured and has a better anti-reviving effect.

Another objective of the present invention is to provide a method that is easy to be implemented to manufacture a RFID tag with a conductive adhesive, which has a better anti-reviving effect.

In order to achieve the foregoing objectives, a RFID tag in accordance with the present invention includes a capacitor plate formed with a decoding point. The decoding point has an interior portion and an outer peripheral portion confining the interior portion. A conductive adhesive is filled into the interior portion and the outer peripheral portion of the decoding point, and then is solidified or cured under a curing temperature.

In accordance with the RFID tag of the present invention, the curing temperature of the conductive adhesive ranges between 100-150°C.

Furthermore, a method of manufacturing a non-revivable RFID tag in accordance with the present invention includes the steps of: punching a recess on a capacitor plate of a circuit of the RFID tag to define a decoding point, wherein the decoding point has an interior portion and an outer peripheral portion confining the interior portion; filling a conductive adhesive into the decoding point in such a manner that the conductive adhesive is filled into the interior portion and the outer peripheral portion of the decoding point; and putting the RFID tag in an environment with a curing temperature so as to solidify or cure the conductive adhesive.

In accordance with the method of the present invention, the curing temperature of the conductive adhesive ranges between 100-150°C.

The difference between the present RFID tag and the conventional RFID tag resides in that according to the present invention, the conductive adhesive is filled into the interior portion and the outer peripheral portion of the decoding point of the capacitor plate, and then is solidified. The solidified conductive adhesive is harder and conductive, which has the following three effects: (1) After the RFID tag is decoded or deactivated, the solidified conductive adhesive protects the decoding point from the action of an external force so as to prevent the RFID tag from reviving. (2) When the RFID tag is decoded or deactivated in an electromagnetic field, the point discharge of the decoding point penetrates through the dielectric layer and the filled conductive adhesive in the interior portion of the decoding point is acted as a new medium to connect the two capacitor plates together, thereby ensuring the short circuit between the two capacitor plates owing to the conductivity of the conductive adhesive. When a relatively smaller external force is applied, the conductive adhesive will couple the two capacitor plates more tightly so as to prevent the RFID tag from reviving. And, (3) when a relatively larger external force is applied, the conductive adhesive will abut against the dielectric layer to separate the two capacitor plates from one anther, thereby increasing the distance between the two capacitor plates, or decreasing the area of the capacitor plates owing to the fact that the capacitor plates are broken into pieces due to the relatively large external force. According to the equation of the frequency represented by $f = 1/(2\pi\sqrt{LC})$, in which C=ξ*S/d, wherein C is capacitance, S is an area of the capacitor plate, d is a distance between the two capacitor plates, and ξ is dielectric constant, when d increases or S decreases, the capacitance C becomes smaller while f increases. Under this condition, the RFID tag has a resultant frequency away from its original frequency or a frequency of an anti-theft detection system, and thus the RFID tag is deactivated and no alarm is generated, so as to achieve the objective of anti-reviving.

As stated above, the RFID tag of the present invention has a better anti-reviving effect than the conventional RFID tags. Furthermore, in manufacturing the RFID tag of the present invention, the required steps are only to fill the conductive adhesive into the interior portion and the outer peripheral portion of the decoding point and then solidify or cure the conductive adhesive, which can be more easily controlled than the conventional cutting type anti-reviving technique since it is hard to control the cutting of the narrow sections of the circuit. Therefore, the RFID tag of the present invention is liable to be manufactured and has a better anti-reviving effect.

BRIEF DESCRIPTION OF THE DRAWINGS

The present invention will be apparent to those skilled in the art by reading the following detailed description of a preferred embodiment thereof, with reference to the attached drawings, in which:

> Fig. 1 shows a diagram of a conventional LC oscillator circuit;
> Fig. 2 is a cross-sectional view illustrating a dielectric layer disposed between two aluminum plates and laminated together;
> Fig. 3 shows a schematic structural view of a traditional RFID tag;
> Fig. 4 is a cross-sectional view illustrating a capacitor with a decoding point;
> Fig. 5 is a schematic structural view showing a conventional RFID tag having an insulated toughening piece attached on a narrow section of a circuit, so as to cut off the narrow section due to the rubbing between the insulated toughening piece and the narrow section during repeated use of the RFID tag;
> Fig. 6 is a schematic structural view showing a conventional RFID tag having a hard insulated toughening piece attached on a decoding point of a capacitor plate;
> Fig. 7 is a schematic structural view showing a conventional RFID tag, in which some sections of the LC oscillator circuit are formed as a connected state but are easily disconnected; and
> Fig. 8 is a cross-sectional view illustrating a capacitor of a RFID tag in accordance with an embodiment of the present invention.

## DETAILED DESCRIPTION OF THE PREFERRED EMBODIMENT

As shown in Fig. 8, a non-revivable Radio Frequency Identification (RFID) tag in accordance with an embodiment of the present invention includes a first capacitor plate 1, a second capacitor plate 5, and a dielectric layer 4 sandwiched between the two capacitor plates 1 and 5. The first capacitor plate 1 is formed with a decoding point 2. The decoding point 2 has an interior portion and an outer peripheral portion confining the interior portion. A conductive adhesive 3 is filled into the interior portion and the outer peripheral portion of the decoding point 2, and then is solidified or cured under a curing temperature 130°C.

During the production of the RFID tag of the present invention, a conventional process is firstly used to form a circuit of the RFID tag, that is, an adhesive is applied to laminate a dielectric layer and two capacitor plates; a circuit is arranged on the capacitor plates by a known method; and a chemical etching process is performed to form the circuit. Afterwards, the capacitor plate of the RFID tag is punched to form a decoding point (a recess), which has an interior portion and an outer peripheral portion confining the interior portion. A conductive adhesive is filled into the interior portion and the outer peripheral portion of the decoding point. Finally, the RFID tag is put in an environment to solidify or cure the conductive adhesive under a curing temperature 130°C. After the conductive adhesive is solidified, other conventional steps are conducted, such as sticking barcode and non-adhesive tape, mold cutting, inspecting, and so on.

According to the present invention, the conductive adhesive can be solidified under other temperatures, such as 100°C or 150°C. In order to provide a stable performance of the conductive adhesive, the curing temperature of the conductive adhesive may be ranged from 100°C to 150°C.

Although the present invention has been described with reference to the preferred embodiments thereof, it is apparent to those skilled in the art that a variety of modifications and changes may be made without departing from the scope of the present invention which is intended to be defined by the appended claims.

## Claims

1.    A non-revivable Radio Frequency Identification (RFID) tag, comprising:

> a capacitor plate formed with a decoding point, wherein the decoding point has an interior portion and an outer peripheral portion confining the interior portion; and
> a conductive adhesive filled into the interior portion and the outer peripheral portion of the decoding point, and then solidified or cured under a curing temperature.

2.    The non-revivable RFID tag according to claim 1, wherein the curing temperature of the conductive adhesive ranges between 100-150°C.

3.    A method of manufacturing a non-revivable Radio Frequency Identification (RFID) tag, comprising the steps of:

> punching a recess on a capacitor plate of a circuit of the RFID tag to define a decoding point, wherein the decoding point has an interior portion and an outer peripheral portion confining the interior portion;
> filling a conductive adhesive into the decoding point in such a manner that the conductive adhesive is filled into the interior portion and the outer peripheral portion of the decoding point; and
> putting the RFID tag in an environment with a curing temperature so as to solidify or cure the conductive adhesive.

4.    The method according to claim 3, wherein the curing temperature of the conductive adhesive ranges between 100-150°C.

**Fig. 1 (Prior Art)**

**Fig. 2 (Prior Art)**

**Fig. 3 (Prior Art)**

**Fig. 4 (Prior Art)**

**Fig. 5 (Prior Art)**

61′

**Fig. 6 (Prior Art)**

**Fig. 7 (Prior Art)**

**Fig. 8**

**Europäisches Patentamt**
**European Patent Office**
**Office européen des brevets**

# EUROPEAN SEARCH REPORT

Application Number

EP 14 15 2544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 012 225 A (GILL PETER [US]) 30 April 1991 (1991-04-30) | 1,2 | INV. G08B13/24 G06K19/073 |
| A | * paragraph [0030] - paragraph [0041]; figures 1A,2A * | 3,4 | |
| X | US 2013/193215 A1 (MINGLE JOHN B [US] ET AL) 1 August 2013 (2013-08-01) | 1,2 | |
| A | * column 3, line 36 - column 4, line 36; figures 1-3 * | 3,4 | |

TECHNICAL FIELDS SEARCHED (IPC)

G08B
G06K

The present search report has been drawn up for all claims

| Place of search | Date of completion of the search | Examiner |
|---|---|---|
| The Hague | 16 January 2015 | Degraeve, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 15 2544

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2015

| Patent document cited in search report | | Publication date | Patent family member(s) | | Publication date |
|---|---|---|---|---|---|
| US 5012225 | A | 30-04-1991 | NONE | | |
| US 2013193215 | A1 | 01-08-2013 | EP | 2810262 A2 | 10-12-2014 |
| | | | US | 2013193215 A1 | 01-08-2013 |
| | | | WO | 2013115951 A2 | 08-08-2013 |

EPO FORM P0459

For more details about this annex : see Official Journal of the European Patent Office, No. 12/82